# EUROPÄISCHE PATENTSCHRIFT

(11) **EP 1 454 101 B1**
(45) Veröffentlichungstag und Bekanntmachung des Hinweises auf die Patenterteilung: **10.08.2005**
(21) Anmeldenummer: 02774732.8
(22) Anmeldetag: 19.10.2002
(51) Int. Cl.: F25C 1/14, A23L 3/36

(54) **VORRICHTUNG ZUR HERSTELLUNG VON SCHERBENEIS**
DEVICE FOR PRODUCING FLAKE ICE
DISPOSITIF DE FABRICATION DE GLACE EN FLOCONS

(30) Priorität: 13.12.2001 DE 10161467; 14.05.2002 DE 10221523
(43) Veröffentlichungstag der Anmeldung: 08.09.2004
(73) Patentinhaber: Funk, Dieter, 77694 Kehl-Kittersburg (DE)
(72) Erfinder: Funk, Dieter, 77694 Kehl-Kittersburg (DE)
(74) Vertreter: Wolf, Eckhard, Dr.-Ing.
(86) Internationale Anmeldenummer: PCT/EP2002/011719
(87) Internationale Veröffentlichungsnummer: WO 2003/054459

(56) Entgegenhaltungen:
- WO-A-01/77592
- WO-A-85/03996
- WO-A-96/07067
- DE-U- 8 709 275
- DE-U- 9 002 856
- DE-U- 9 307 466
- US-A- 2 145 331

## Beschreibung

Die Erfindung betrifft eine Vorrichtung zur Herstellung von Scherbeneis aus einer Flüssigkeit, insbesondere aus Wasser, mit einem im wesentlichen aus zwei parallel im Abstand voneinander angeordneten, plattenförmigen Seitenteilen und einem sich flüssigkeitsdicht zwischen den Seitenteilen erstreckenden Wannenteil bestehenden Gehäuse, mit einer in den Seitenteilen um eine horizontale Achse drehbar gelagerten, innenseitig mit einem Kühlmittel beaufschlagbaren und partiell in die in einem Flüssigkeitsreservoir im unteren Bereich des Gehäuses bevorratete Flüssigkeit eintauchende Verdampferwalze und mit einem im geringen Abstand von der äußeren Mantelfläche der Verdampferwalze angeordneten Abschaber für auf der Mantelfläche gebildetes Eis. Die Erfindung betrifft weiterhin eine Anordnung mit eines derartigen Vorrichtung und mit einem Außengehäuse zur Aufnahme einer derartigen Vorrichtung.

Mit Vorrichtungen dieser Art hergestelltes Scherbeneis wird hauptsächlich in der Lebensmittelindustrie zur Kühlung von Frischware, beispielsweise von Frischfisch oder Meeresfrüchten beim Transport oder in der Auslage eines Lebensmittelgeschäftes, oder auch als Eisbeimengung bei der Herstellung von Backteigen verwendet. Aufgrund des unmittelbaren Kontaktes des Scherbeneises mit den Lebensmitteln sind strenge hygienische Vorschriften einzuhalten. Da Scherbeneismaschinen oft kontinuierlich arbeiten, bildet sich nach längerer Betriebsdauer aus den im zugeführten Wasser enthaltenen Schwebstoffen ein schlickartiges Sediment, das einen Nährboden für Keime darstellen kann. Aufgrund der geschlossenen Gehäusebauweise bei bekannten Vorrichtungen der eingangs genannten Art ist eine vollständige Reinigung der Maschine jedoch schwierig oder gar nicht möglich. Bei einer aus der WO 96/07067 bekannten Scherbeneismaschine soll dieses Problem dadurch gelöst werden, daß zunächst die Scherbeneisproduktion unterbrochen wird und der in der Gefriertlüssigkeitswanne befindliche Rest der Gefrierflüssigkeit über einen Flüssigkeitsablauf abgeleitet wird. Anschließend wird der Kessel eines Dampferzeugers mit Wasser befüllt und das Wasser mindestens auf eine Temperatur erhitzt, die die Sterilisation ermöglicht. Dieses erhitzte Reinigungsmedium wird dann über eine Leitung und über in den Wänden der Gefrierflüssigkeitswanne angeordnete Düsen diesem Bereich zugeführt. Die Innenwand der Gefrierflüssigkeitswanne und die inzwischen zur Rotation angetriebene Verdampferwalze werden mit dem heißen Medium, z. B. Dampf, besprüht. Das kondensierte Medium wird über einen Flüssigkeitsablauf in der Gefrierflüssigkeitswanne abgeleitet. Nachdem der Einsprühvorgang abgeschlossen ist, kühlen die besprühten Teile der Scherbeneismaschine zunächst ab. Durch das Besprühen mit heißem Reinigungsmedium sollen sowohl grobe Verunreinigungen, wie Staub- und Schmutzpartikel, von Walze und Wanne entfemt, als auch Krankheitserreger abgetötet werden. Abschließend können die gereinigten Teile erforderlichenfalls mit einer Reinigungsflüssigkeit gespült werden. Ein derartiges Vorgehen ist sehr aufwendig und es wird als nachteilig empfunden, daß aufgrund der geschlossenen Gehäusebauweise der Maschine eine Sichtkontrolle des Reinigungsergebnisses nicht möglich ist. Weiterhin ist es auf diese Weise nicht möglich, sicherzustellen, daß sämtliche Verunreinigungen aus dem Gehäuse entfernt werden, insbesondere aus dem Bereich unterhalb des Abschabers.

Ausgehend hiervon liegt der vorliegenden Erfindung die Aufgabe zugrunde, eine Vorrichtung der eingangs genannten Art bereitzustellen, die bei möglichst einfachem Aufbau eine vollständige Reinigung des Innenbereichs des Gehäuses ermöglicht, sowie ein Außengehäuse zur Aufnahme einer derartigen Vorrichtung zu schaffen, dass einen einfachen Zugang zu der Vorrichtung erlaubt.

Zur Lösung dieser Aufgabe werden die in den Patentansprüchen 1 und 12 angegebenen Merkmalskombinationen vorgeschlagen. Vorteilhafte Ausgestaltungen und Weiterbildungen der Erfindung ergeben sich aus den abhängigen Ansprüchen.

Die Erfindung geht vor allem von dem Gedanken aus, daß es für eine vollständige Reinigung der Vorrichtung unerläßlich ist, einen direkten Zugang zum Innenbereich des Gehäuses zu haben. Bei den bekannten Scherbeneismaschinen weisen die Seitenteile eine im wesentlichen rechteckige Form auf und das Wannenteil ist als Blechbiegeteil mit einer entsprechenden Kontur ausgebildet und fest mit den Seitenteilen verbunden. Ein Entfemen des Wannenteils zu Reinigungszwecken wäre nicht nur sehr zeitaufinrendig, sondem würde auch spezielles Werkzeug und geschultes Personal erfordern. Nach mehrfachem Entfemen des Wannenteils von den Seitenteilen wäre es zudem schwierig, die Dichtheit des Gehäuses gegen Flüssigkeitsaustritt sicherzustellen. Um dennoch ein einfaches Entfemen des Wannenteils von den Seitenteilen zu ermöglichen, wird gemäß der Erfindung vorgeschlagen, daß die Seitenteile eine im wesentlichen kantenfreie Außenkontur aufweisen, daß an den Stimflächen der Seitenteile Dichtkörper angeordnet sind, die sich zumindest entlang eines Teilumfangs der Seitenteile erstrecken und daß das Wannenteil mit seinen seitlichen Endbereichen an den Stimflächen der Seitenteile anliegt und mittels einer Spanneinrichtung gegen diese verspannbar ist. In bevorzugter Ausgestaltung der Erfindung weisen die Seitenteile eine im wesentlichen runde oder ovale Außenkontur auf. Mit diesen Maßnahmen ist es möglich, das Wannenteil derart an den Seitenteilen zu befestigen, daß es ohne großen mechanischen oder zeitlichen Aufwand von ungeschultem Personal zu Reinigungszwecken entfernt werden kann. Da die Seitenteile in Umfangsrichtung eine im wesentlichen, d. h. zumindest im Bereich der notwendigen Abdichtung zwischen Wannenteil und Seitenteilen, kantenfreie Außenkontur aufweist, ist zum einen eine gute Abdichtung zwischen den betreffenden Partien des Wannenteils und der Seitenteile möglich und zum anderen läßt sich das Wannenteil zuverlässig gegen die Stimflächen der Seitenteile verspannen, was bei einer im wesentlichen rechteckigen Außenkontur der Seitenteile nicht möglich wäre.

Gemäß einer bevorzugten Weiterbildung der Erfindung sind die Seitenteile mit einer sich zumindest über einen Teilumfang erstreckenden Nut zur Aufnahme der Dichtkörper versehen, wobei die Dichtkörper zweckmäßig als O-Ring oder als Profilring ausgebildet sind. Die Dichtkörper nehmen bevorzugt einen Klemmsitz in der Nut ein, so daß sie bei abgenommenem Wannenteil in dieser verbleiben, wodurch die auf eine Reinigung folgende Montage des Wannenteils an den Seitenteilen vereinfacht wird.

Vorzugsweise weist das Wannenteil in der ebenen Projektion eine im wesentlichen rechteckige Grundform auf. Es besteht bevorzugt aus einem flexiblen Metallblech, vorzugsweise aus Edelstahlblech, das zur einfacheren Handhabung bei der Montage vorgeformt, d. h. im wesentlichen an die Au-βenkontur der Seitenteile angepaßt sein kann. Zur Befestigung des Wannenteils an den Seitenteilen weisen diese vorzugsweise über ihre Außenkontur überstehende, in Öffnungen des Wannenteils eingreifende klauenartige Aufnahmedome auf. Die Aufnahmedome sind zweckmäßig an den oberen Stimflächen der Seitenteile angeordnet. Da die Ausgabe des Eises frontseitig über ein an den Abschaber anschließende Rutsche erfolgt, muß in diesem Bereich eine sich im wesentlichen über die gesamte Breite der Verdampferwalze erstreckende Aussparung in dem Wannenteil vorgesehen sein. Das Wannenteil weist daher zur Befestigung an den oberhalb des Abschabers angeordneten Aufnahmedomen zwei seitliche, in Umfangsrichtung der Seitenteile über den Bereich des Abschabers hinausreichende Laschenfortsätze mit den Öffnungen für die Aufnahmedome auf. Entweder die frontseitigen oder die rückseitigen Aufnahmedome sind starr an den Seitenteilen befestigt, während das andere Paar der Aufnahmedome in Umfangsrichtung verschwenkbar an den Seitenteilen befestigt ist, um ein Lösen bzw. Verspannen des in die Dome eingehängten Wannenteils zu ermöglichen. In bevorzugter Ausgestaltung der Erfindung weisen die Spannmechanismen daher jeweils eine schwenkbar am Seitenteil gelagerte, an ihrem freien Ende den Aufnahmedom aufweisende Spannklaue auf. Der Spannvorgang läßt sich auf besonders einfache Weise durchführen, wenn die Spannklaue eine durchgehende Gewindebohrung zur Aufnahme einer gegen das Seitenteil abstützbaren Spannschraube aufweist. Die Spannschraube weist vorzugsweise einen Betätigungsgriff auf, so daß kein zusätzliches Werkzeug zum Lösen oder Verspannen der Spannklauen erforderlich ist. In altemativer Ausgestaltung der Erfindung können die Spannklauen gekoppelt sein, so daß sie sich über eine einzige Spannschraube betätigen lassen. Grundsätzlich läßt sich die Spanneinrichtung für das Wannenteit auch auf andere geeignete Weise realisieren, beispielsweise durch ein Spannband, das die beidseitigen Endbereiche des Wannenteils miteinander verbindet oder das das Wannenteil übergreifend um die Seitenteile herumgelegt ist.

Das erfindungsgemäße Außengehäuse ist zur Aufnahme der Vorrichtung sowie dieser zugeordneter Nebenaggregate und/oder Steuereinrichtungen, Flüssigkeitsleitungen und dergleichen bestimmt und weist den Gehäuseinnenraum zumindest seitlich und oben begrenzende Gehäusewände auf. Um die regelmäßig erfolgende Reinigung der Vorrichtung, insbesondere das Entfemen des Wannenteils, ohne den Einsatz von Werkzeugen zu ermöglichen, weist mindestens eine der Gehäusewände eine nach außen schwenkbare oder parallel zur Gehäusewand verschiebbare, eine Entnahmeöffnung für zumindest das Wannenteil der Vorrichtung wahlweise freigebende oder verschließende Wandpartie auf. Die Wandpartie kann dabei als im Wesentlichen rechteckige, an ihren unteren Ecken schwenkbar an der umgebenden Gehäusewand gelagerte Klappe ausgebildet sein. Soweit das erzeugte Scherbeneis einem Sammelbehälter außerhalb des Außengehäuses zugeführt wird, ist es weiterhin von Vorteil wenn die Wandpartie eine Ausgabeöffnung für das Scherbeneis aufweist und wenn an der Außenseite der Wandpartie eine vorzugsweise an die Unterkante der Ausgabeöffnung anschfießende, schräg nach unten gerichtete Ausgaberutsche für Scherbeneis angeordnet ist.

Um eine geringe Korrosionsanfälligkeit des Außengehäuses zu gewährleisten, können die Gehäusewände aus Metall, vorzugsweise aus einem rostfreien Edelstahl bestehen. Weiterhin ist eine gute Luftzirkulation durch das Außengehäuse zur Abführung der bei der Eiserzeugung entstehenden Wärme von Vorteil. Zu diesem Zweck kann mindestens eine der Gehäusewände eine Mehrzahl von Belüftungsöffnungen, beispielsweise in der Form von Perforationen oder Lüftungsschlitzen aufweisen. Um den Scherbeneiserzeuger in einer komfortablen Arbeitshöhe in dem Außengehäuse anordnen zu können, ist in einem oberen Gehäusebereich im Abstand von der oberen Gehäusewand ein Zwischenboden angeordnet oder es sind dort Längs- und/oder Querstreben als Montagekonsole für die Vorrichtung und/oder dieser zugeordneter Nebenaggregate und/oder Steuereinrichtungen vorgesehen.

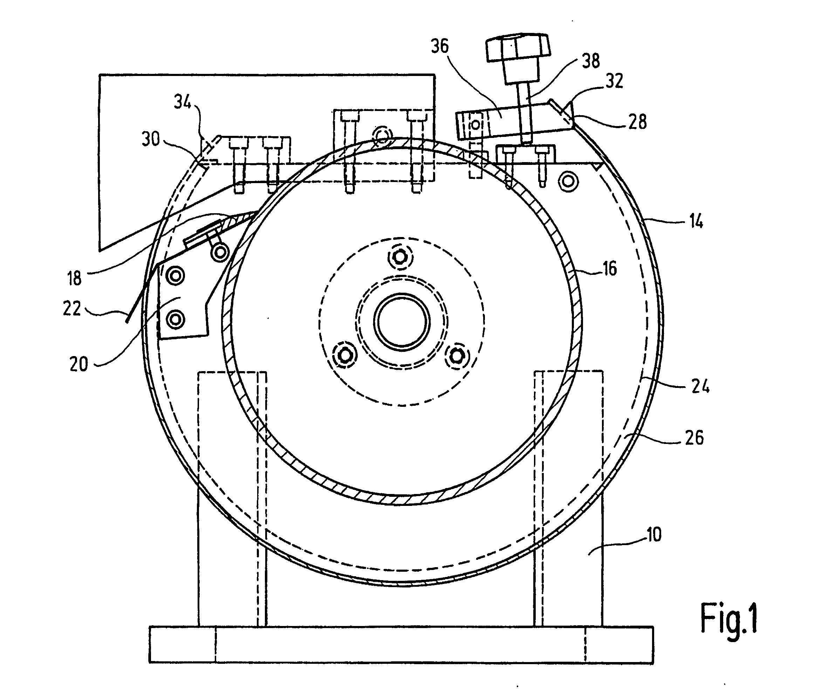

Im folgenden wird die Erfindung anhand eines in der Zeichnung schematisch dargestellten Ausführungsbeispiels näher erläutert. Es zeigen
- Fig. 1: eine geschnittene Seitenansicht eines Ausführungsbeispiels der erfindungsgemäßen Vorrichtung;

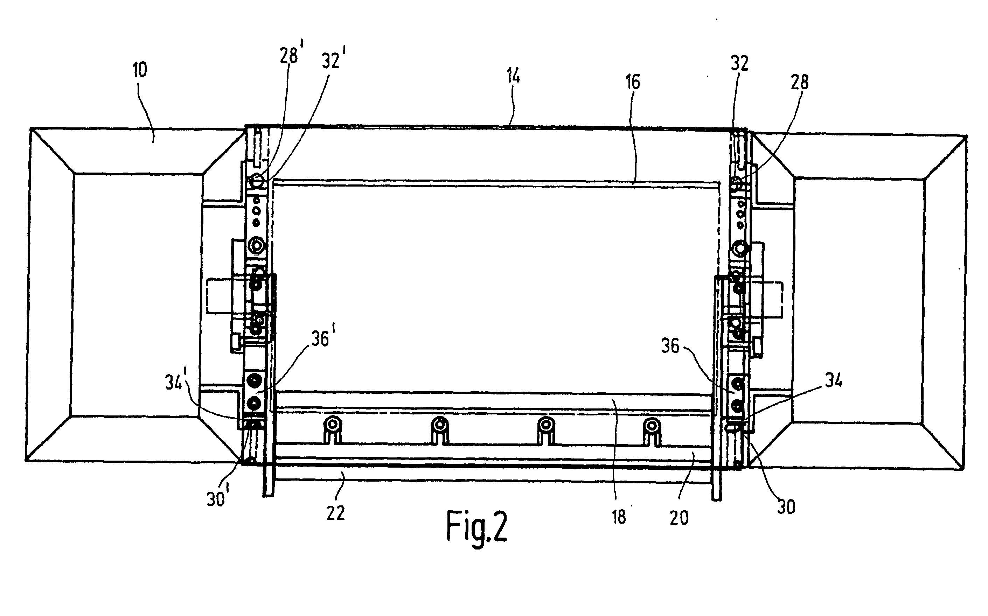

- Fig. 2: eine Draufsicht auf die Vorrichtung gemäß Fig. 1;

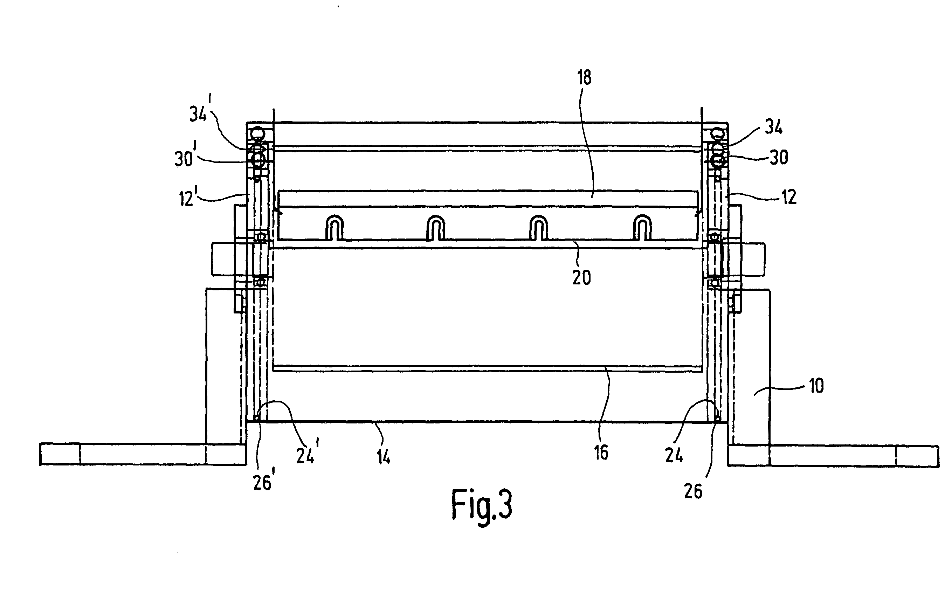

- Fig. 3: eine Frontansicht der Vorrichtung gemäß Fig. 1 und 2;
- Fig. 4a: bis c ein Außengehäuse zur Aufnahme einer Vorrichtung gemäß den Fig. 1 bis 3 in einer Frontansicht, einer Seitenansicht und einer Draufsicht bei entfernter oberer Gehäusewand; und
- Fig. 5: eine geschnittene Seitenansicht eines Ausschnitts des oberen Bereiches des Außengehäuses mit einer hinter einer schwenkbaren Klappe angeordneten Vorrichtung gemäß Fig. 1 bis 3.

Die in der Zeichnung dargestellte Vorrichtung zur Herstellung von Scherbeneis besteht im wesentlichen aus einem auf einer Konsole 10 montierten, zwei Seitenteile 12, 12' und ein Wannenteil 14 aufweisenden Gehäuse, in dem eine Verdampferwalze 16 um eine horizontale Achse drehbar gelagert ist. Das Wannenteil 14 ist über eine nicht näher dargestellte Zuführöffnung in einem der Seitenteile 12, 12' mit Flüssigkeit befüllbar. Die Verdampferwalze 16 ist innenseitig mit einem Kühlmittel beaufschlagbar und mittels eines Antriebsmotors drehbar. Im Betrieb taucht die Verdampferwalze 16 in die Eis bildende Flüssigkeit ein und wird mittels des Antriebsmotors in eine Drehbewegung versetzt, so daß sich an dem Außenmantel der Verdampferwalze eine Eisschicht bildet. Das derart erzeugte Eis wird mittels eines Abschabers 18, der in einem geringen Abstand von wenigen zehntel Millimetern von der Verdampferwalze auf einer sich zwischen den Seitenteilen 12, 12' erstreckenden Traverse 20 angeordnet ist, von der Verdampferwalze abgeschabt und über eine Rutsche 22 beispielsweise einem Sammelbehälter zugeführt.

Um das Wannenteil 14 zu Reinigungszwecken der Vorrichtung auf einfache Weise entfemen zu können, ist es mittels einer Spanneinrichtung auf die Seitenteile 12, 12' aufgespannt. Da das Gehäuse flüssigkeitsdicht sein muß, ist eine Abdichtung zwischen dem Wannenteil 14 und den Seitenteilen 12, 12' von Vorteil. Um dies zu ermöglichen, ist die Außenkontur der Seitenteile 12, 12' im wesentlichen kreisförmig ausgebildet. Weiterhin ist die Stimfläche der Seitenteile 12, 12' mit einer Nut 24, 24' versehen, in der ein O-ringförmiger Dichtkörper 26, 26' angeordnet ist.

Das Wannenteil 14 ist als elastisch biegsames Blechteil ausgebildet und weist an seinen vier Ecken Öffnungen 28, 28', 30, 30' auf, in die im oberen Bereich der Seitenteile 12, 12' angeordnete Aufnahmedome 32, 32', 34, 34' eingreifen. Die im Bereich des Abschabers 18 angeordneten Aufnahmedorne sind fest mit den Seitenteilen 12, 12' verschraubt, während die rückwärtigen Aufnahmedome 32, 32' an schwenkbar an den Seitenteilen 12, 12' gelagerten Spannklauen 36, 36' angeordnet sind. Die Spannklauen 36, 36' weisen eine durchgehende Gewindebohrung auf, durch die eine Spannschraube 38 hindurchgreift. Die Spannschraube 38 stützt sich an der oberen Stirnseite der Seitenteile 12, 12' ab, so daß eine Betätigung der Spannschraube 38 ein Verschwenken der Spannklaue in Umfangsrichtung der Seitenteile 12, 12' bewirkt. Zur Befestigung des Wannenteils 14 an den Seitenteilen 12, 12' werden die beiderseitigen Spannschrauben 38 zunächst gelöst, so daß sich das Wannenteil 14 mit seinen Aufnahmeöffnungen 28, 28', 30, 30' in die Aufnahmedome 32, 32', 34, 34' spannungsfrei einhängen läßt. Durch Anziehen der Spannschrauben 38 werden die Spannklauen 36, 36' derart verschwenkt, daß das Wannenteil 14 dicht anliegend gegen die Stimflächen der Seitenteile 12, 12' verspannt wird. Auf diese Weise kann das Wannenteil in wenigen Augenblicken und ohne Zuhilfenahme von Werkzeugen entfernt oder montiert werden, so daß eine Reinigung der Vorrichtung mit geringstem Aufwand möglich ist.

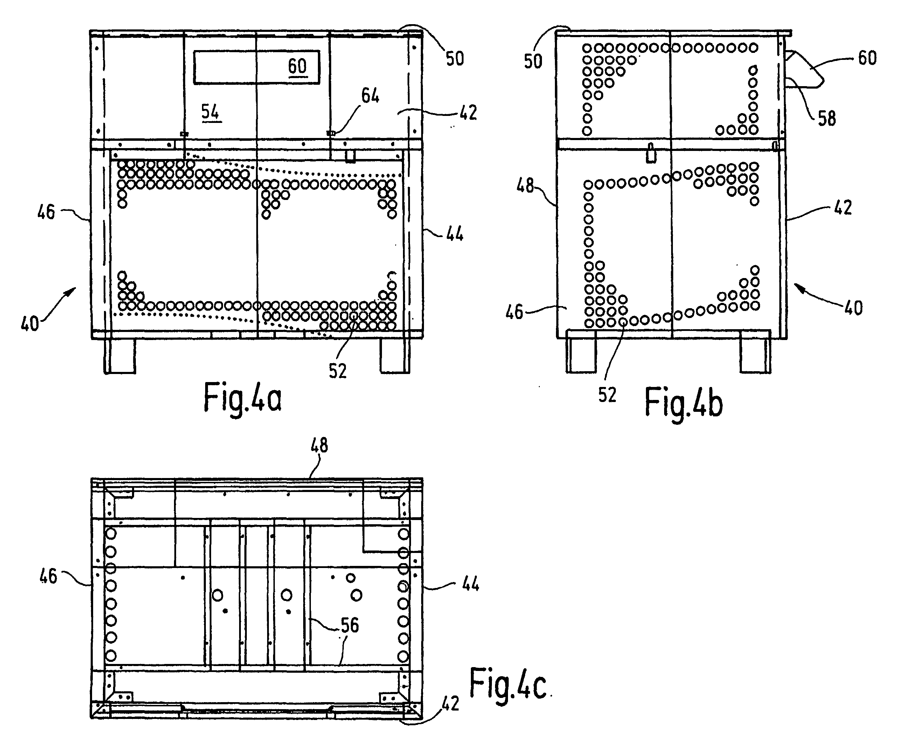

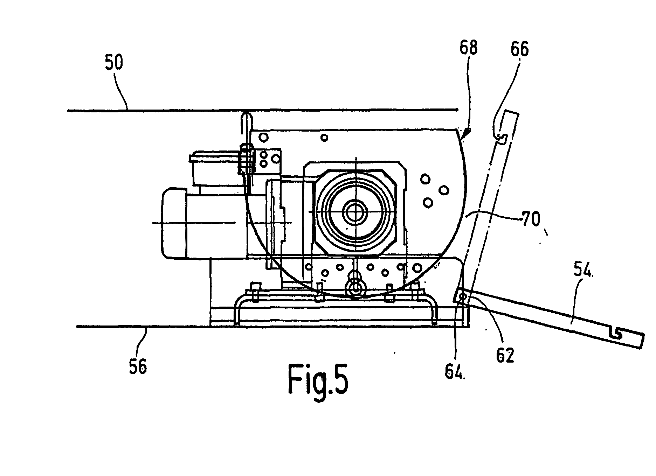

Das in Fig. 4 dargestellte Außengehäuse 40 für den Scherbeneiserzeuger und dessen Nebenaggregate, Versorgungsleitungen und Steuereinrichtungen ist im Wesentlichen kastenförmig ausgebildet und weist seitliche Gehäusewände 42-48 und eine Gehäuseabdeckung 50 aus korrosionsbeständigem Edelstahl auf. Um eine gute Luftzirkulation zu Kühlzwecken der darin angeordneten Komponenten zu gewährleisten, weisen die Gehäusewände eine Vielzahl von Durchbrechungen 52 auf. Die frontseitige Gehäusewand 42 weist im Bereich des dahinter angeordneten Scherbeneiserzeugers eine als Schwenkklappe 54 ausgebildete Wandpartie auf (vgl. Fig. 5). Im oberen Bereich des Außengehäuses 40 sind mehrere Längs- und Querstreben 56 angeordnet, die eine Montagekonsole für die Eiserzeugerkomponenten bilden.

Die Schwenkklappe 54 weist eine Ausgabeöffnung 58 für das erzeugte Scherbeneis auf, an deren Unterkante eine schräg nach unten gerichtete Ausgaberutsche 60 anschließt.

Wie aus Fig. 5 ersichtlich ist, ist die Schwenkklappe 54 im unteren Bereich ihrer Vertikatseiten mittels in Durchbrechungen 62 eingreifender Stifte 64 schwenkbar gelagert. Zur Arretierung der Schwenkklappe 54 im geschlossenen Zustand weist diese im oberen Bereich ihrer Vertikalseiten Rastöffnungen 66 auf, und das Außengehäuse 40 entsprechende Raststifte 68. Das Öffnen der Schwenkklappe 54 unter Freigabe einer Entnahmeöffnung 70 für das Wannenteil des Scherbeneiserzeugers läßt sich somit ohne Werkzeug bewerkstelligen, so daß der Reinigungsvorgang des Scherbeneiserzeugers auf einfache und schnelle Weise ohne Zuhilfenahme von Werkzeug oder eine aufwrändige Demontage größerer Außengehäuseteile erfolgen kann.

Zusammenfassend ist folgendes festzuhalten: Die Erfindung betrifft eine Vorrichtung zur Herstellung von Scherbeneis aus einer Flüssigkeit, insbesondere aus Wasser, mit einem im wesentlichen aus zwei parallel im Abstand voneinander angeordneten, plattenförmigen Seitenteilen 12, 12' und einem sich flüssigkeitsdicht zwischen den Seitenteilen 12, 12' erstreckenden Wannenteil 14 bestehenden Gehäuse, mit einer in den Seitenteilen 12, 12' um eine horizontale Achse drehbar gelagerten, innenseitig mit einem Kühlmittel beaufschlagbaren und partiell in die in einem Flüssigkeitsreservoir im unteren Bereich des Gehäuses bevorratete Flüssigkeit eintauchende Verdampferwalze 16 und mit einem im geringen Abstand von der äußeren Mantelfläche der Verdampferwalze 16 angeordneten Abschaber 18 für auf der Mantelfläche gebildetes Eis. Um eine Reinigung des Innenbereichs des Gehäuses mit einfachsten Mitteln und geringem Aufwand zu ermöglichen, wird gemäß der Erfindung vorgeschlagen, daß die Seitenteile 12, 12' eine im wesentlichen kantenfreie Außenkontur aufweisen, daß an den Stimflächen der Seitenteile 12, 12' Dichtkörper 26, 26' angeordnet sind, die sich zumindest entlang eines Teilumfangs der Seitenteile 12, 12' erstrecken, und daß das Wannenteil 14 mit seinen seitlichen Endbereichen an den Stimflächen der Seitenteile 12, 12' anliegt und mittels einer Spanneinrichtung 32 bis 38 gegen diese verspannbar ist.

## Patentansprüche

1. Vorrichtung zur Herstellung von Scherbeneis aus einer Flüssigkeit, insbesondere aus Wasser, mit einem im wesentlichen aus zwei parallel im Abstand voneinander angeordneten, plattenförmigen Seitenteilen (12, 12') und einem sich flüssigkeitsdicht zwischen den Seitenteilen (12, 12') erstreckenden Wannenteil (14) bestehenden Gehäuse, mit einer in den Seitenteilen (12, 12') um eine horizontale Achse drehbar gelagerten, innenseitig mit einem Kühlmittel beaufschlagbaren und partiell in die in einem Flüssigkeitsreservoir im unteren Bereich des Gehäuses bevorratete Flüssigkeit eintauchende Verdampferwalze (16) und mit einem im geringen Abstand von der äußeren Mantelfläche der Verdampferwalze (16) angeordneten Abschaber (18) für auf der Mantelfläche gebildetes Eis, **dadurch gekennzeichnet, daß** die Seitenteile (12, 12') eine im wesentlichen kantenfreie Außenkontur aufweisen, daß an den Stimflächen der Seitenteile (12, 12') Dichtkörper (26, 26') angeordnet sind, die sich zumindest entlang eines Teilumfangs der Seitenteile (12, 12') erstrecken, und daß das Wannenteil (14) mit seinen seitlichen Endbereichen an den Stirnflächen der Seitenteile (12, 12') anliegt und mittels einer Spanneinrichtung (32 bis 38) gegen diese verspannbar ist.

2. Vorrichtung nach Anspruch 1, **dadurch gekennzeichnet, daß** die Seitenteile (12, 12') eine im wesentlichen runde oder ovale Außenkontur aufweisen.

3. Vorrichtung nach Anspruch 1 oder 2, **dadurch gekennzeichnet, daß** die Seitenteile (12, 12') mit einer sich zumindest über einen Teilumfang erstreckenden Nut (24) zur Aufnahme der Dichtkörper (26, 26') versehen sind.

4. Vorrichtung nach einem der Ansprüche 1 bis 3, **dadurch gekennzeichnet**, das die Dichtkörper (26, 26') als O-Ringe oder als Profilringe ausgebildet sind.

5. Vorrichtung nach einem der Ansprüche 1 bis 4, **dadurch gekennzeichnet, daß** das Wannenteil (14) als vorgeformtes, im wesentlichen an die Außenkontur der Seitenteile (12, 12') angepaßtes Blechteil ausgebildet ist.

6. Vorrichtung nach einem der Ansprüche 1 bis 5, **dadurch gekennzeichnet, daß** die Spanneinrichtung über die Außenkontur der Seitenteile (12, 12') überstehende, in Öffnungen (28, 28'; 30, 30') des Wannenteils (14) eingreifende klauenartige Aufnahmedome (32, 32'; 34, 34') aufweist.

7. Vorrichtung nach einem der Ansprüche 1 bis 6, **dadurch gekennzeichnet, daß** das Wannenteil (14) die Seitenteile (12, 12') in Umfangsrichtung bis zum Bereich des Abschabers (18) umschließt.

8. Vorrichtung nach Anspruch 7, **dadurch gekennzeichnet**, das das Wannenteil (14) zwei seitliche, in Umfangsrichtung der Seitenteile (12, 12') über den Bereich des Abschabers (18) hinausreichende Laschenfortsätze mit Öffnungen (30, 30') für die Aufnahmedome (34, 34') aufweist.

9. Vorrichtung nach einem der Ansprüche 6 bis 8, **dadurch gekennzeichnet, daß** die Spanneinrichtung zwei im oberen Bereich der Seitenteile (12, 12') angeordnete Spannmechanismen (36, 38) aufweist.

10. Vorrichtung nach Anspruch 9, **dadurch gekennzeichnet, daß** die Spannmechanismen (36, 38) jeweils eine schwenkbar am Seitenteil (12, 12') gelagerte, an ihrem freien Ende den Aufnahmedom (32, 32') aufweisende Spannklaue (36) aufweisen.

11. Vorrichtung nach Anspruch 10, **dadurch gekennzeichnet, daß** die Spannklaue (36) eine durchgehende Gewindebohrung zur Aufnahme einer gegen das Seitenteil (12, 12') abstützbaren Spannschraube (38) ausweist.

12. Anordnung zur Herstellung von Scherbeneis aus einer Flbssigkeft, mit einer Vorrichtung nach einem der Ansprüche 1 bis 11 und mit einem Außengehäuse mit den Gehäuseinnenraum zumindest seitlich und oben begrenzenden Gehäusewänden (42 - 50), **dadurch gekennzeichnet, dass** mindestens eine der Gehäusewände (42) des Außengehäuses eine nach außen schwenkbare oder parallel zur Gehäusewand (42) verschiebbare, eine Entnahmeöffnung (17) für zumindest das Wannenteil (14) der Vorrichtung wahlweise freigebende oder verschließende Wandpartie (54) aufweist.

13. Anordnung nach Anspruch 12, **dadurch gekennzeichnet, dass** die Wandpartie als im Wesentlichen rechteckige, an ihren unteren Ecken schwenkbar an der umgebenden Gehäusewand (42) gelagerte Klappe (54) ausgebildet ist.

14. Anordnung nach Anspruch 12 oder 13, **dadurch gekennzeichnet, dass** die Wandpartie (42) eine Ausgabeöffnung (58) für mittels der Vorrichtung hergestellten Scherbeneises aufweist

15. Anordnung nach Anspruch 14, **dadurch gekennzeichnet, daß** an der Außenseite der Wandpartie (42) eine vorzugsweise an die Unterkante der Ausgabeöffnung (58) anschließende, schräg nach unten gerichtete Ausgaberutsche (60) für Scherbeneis angeordnet ist.

16. Anordnung nach einem der Ansprüche 12 bis 15, **dadurch gekennzeichnet, dass** die Gehäusewände (42 - 50) aus Metall, vorzugsweise aus einem rostfreien Edelstahl bestehen.

17. Anordnung nach einem der Ansprüche 12 bis 16, **dadurch gekennzeichnet, dass** mindestens eine der Gehäusewände (42 - 50) eine Mehrzahl von Belüftungsöffnungen (52) aufweist

18. Anordnung nach einem der Ansprüche 12 bis 17, **dadurch gekennzeichnet, dass** in einem oberen Gehäusebereich ein Zwischenboden oder Längs- und/oder Querstreben (56) als Montagekonsole für die Vorrichtung und/oder dieser zugeordneter Nebenaggregate und/oder Steuereinrichtungen angeordnet ist/sind.

## Claims

1. A device for making shaved ice from a fluid, in particular, from water, having a housing essentially consisting of a pair of mutually parallel side panels (12, 12') in the form of plates arranged at a distance from one another, a fluid-tight vat (14) situated between its side panels (12, 12'), an evaporator drum (16), whose inner surface may be cooled by a refrigerant, that is partially immersed in a fluid stored in a fluid reservoir situated in the lower section of its housing and may be rotated about a horizontal axis running between the side panels (12, 12'), and a scraper (18) for scraping off ice formed on the outer surface of the evaporator drum (16) arranged at a short distance from the outer surface of the latter, **characterized in that** the edges of the side panels (12, 12') have contours that are essentially free of corners, seals (26, 26') extending at least partway around the perimeters of the side panels (12, 12') are arranged on the edges of the side panels (12, 12'), and the vat (14) abuts against the edges of the side panels (12, 12') in the vicinities of the ends of its lateral surfaces and may be clamped thereto using clamping devices (32 - 38).

2. A device according to claim 1, **characterized in that** the side panels (12, 12') have essentially circular, or oval, perimeters.

3. A device according to claim 1 or 2, **characterized in that** the side panels (12, 12') are provided with a groove (24) extending at least partway around their perimeters for accommodating the seals (26, 26').

4. A device according to any of claims 1 to 3, **characterized in that** the seals (26, 26') are configured in the form of O-rings or profiled rings.

5. A device according to any of claims 1 to 4, **characterized in that** the vat (14) is configured in the form of a preformed, sheet-metal component whose shape essentially conforms to the contours of the perimeters of the side panels (12, 12').

6. A device according to any of claims 1 to 5, **characterized in that** the clamping devices have claw-like locating mandrels (32, 32'; 34, 34') that extend beyond the edges of the side panels (12, 12') and engage slots (28, 28'; 30, 30') in the vat (14).

7. A device according to any of claims 1 to 6, **characterized in that** the vat (14) encloses the edges of the side panels (12, 12'), up to the vicinity of the scraper (18).

8. A device according to claim 7, **characterized in that** the vat (14) has a pair of lateral prongs extending beyond the vicinity of the scraper (18), toward the edges of the side panels (12, 12'), having slots (30, 30') for accommodating the locating mandrels (34, 34').

9. A device according to any of claims 6 to 8, **characterized in that** the clamping devices have a pair of clamping mechanisms (36, 38) arranged in the vicinities of the upper sections of the side panels (12, 12').

10. A device according to claim 9, **characterized in that** every clamping mechanism (36, 38) has a clamping claw (36) pivoted on the side panels (12, 12') on the far end of its locating mandrel (32, 32').

11. A device according to claim 10, **characterized in that** the clamping claws (36) have a threaded through hole for accommodating a clamping screw (38) that abuts against the side panels (12, 12').

12. An outer housing for accommodating a device according to any of claims 1 to 11, as well as items of auxiliary equipment and/or control devices for such a device, having walls (42 - 50) bounding the housing at least laterally and at the top, **characterized in that** at least one of the housing's walls (42) has a section (54) that may be swung outward or slid parallel to the housing's wall (42) that optionally opens or closes an access port (70) for removing at least the device's vat (14).

13. An outer housing according to claim 12, **characterized in that** the section of the wall is configured in the form of an essentially rectangular flap (54) whose lower corners are hinged on the surrounding wall (42) of the housing.

14. An outer housing according to claim 12 or 13, **characterized in that** the section of the wall (42) has an exit aperture (58) for withdrawing shaved ice made by the device.

15. An outer housing according to claim 14, **characterized in that** an exit chute (60) for shaved ice that is inclined downward and preferably joined to the lower edge of the exit aperture (58) is arranged on the outer surface of the wall (42).

16. An outer housing according to any of claims 12 to 15, **characterized in that** the housing's walls (42 - 50) consist of a metal, preferably a corrosion-resistant stainless steel.

17. An outer housing according to any of claims 12 to 16, **characterized in that** at least one of the housing's walls (42 - 50) has numerous ventilation ports (52).

18. An outer housing according to any of claims 12 to 17, **characterized in that** a partition or longitudinal and/or transverse struts (56) that serve as a mounting console for the device and/or its associated auxiliary equipment and/or control devices is/are arranged in an upper section of the housing.

## Revendications

1. Dispositif pour la fabrication de glace en écailles à partir d'un liquide, en particulier à partir d'eau, composé essentiellement d'un boîtier muni de deux parties latérales (12, 12') en forme de plaques disposées à distance et parallèlement l'une par rapport à l'autre et d'une partie bac (14) s'étendant de façon étanche aux liquides entre les parties latérales (12, 12'), ledit boîtier étant équipé d'un tambour condensateur (16) disposé dans les parties latérales, pivotant autour d'un axe horizontal, dont la face interne peut être pulvérisée de réfrigérant, partiellement immergé dans le liquide stocké dans un réservoir à liquide situé dans la partie basse du boîtier, et d'un racloir (18) disposé à faible distance de la surface externe latérale du tambour condensateur (16) et qui racle la glace formée sur la surface latérale, **caractérisé en ce que** les parties latérales (12, 12') présentent un contour extérieur essentiellement sans arête, que sur les faces avant des parties latérales (12, 12') sont disposés des joints (26, 26') qui s'étendent au moins sur une portion du pourtour des parties latérales (12, 12') et que les extrémités latérales de la partie bac (14) reposent contre les faces avant des parties latérales (12, 12') et sont serrées contre elles à l'aide d'un dispositif de serrage (32 à 38).

2. Dispositif selon la revendication 1, **caractérisé en ce que** les parties latérales (12, 12') présentent un contour essentiellement rond ou ovale.

3. Dispositif selon l'une des revendications 1 ou 2, **caractérisé en ce que** les parties latérales (12, 12') sont pourvues d'une rainure (24) sur au moins une portion du pourtour, destinée à abriter les joints (26, 26').

4. Dispositif selon l'une quelconque des revendications 1 à 3, **caractérisé en ce que** les joints (26, 26') sont conçus sous forme de joint torique ou d'anneau profilé.

5. Dispositif selon l'une quelconque des revendications 1 à 4, **caractérisé en ce que** la partie bac (14) est constituée d'une tôle d'acier préformée, essentiellement adaptée au contour extérieur des parties latérales (12, 12').

6. Dispositif selon l'une quelconque des revendications 1 à 5, **caractérisé en ce que** le dispositif de serrage présente des mandrins porte-pièces (32, 32', 34, 34') en forme de griffe qui entrent dans les orifices (28, 28', 30, 30') de la partie bac (14) et qui dépassent le contour extérieur des parties latérales (12, 12').

7. Dispositif selon l'une quelconque des revendications 1 à 6, **caractérisé en ce que** la partie bac (14) entoure les parties latérales (12, 12') dans la direction du pourtour, jusqu'à la zone du racloir (18).

8. Dispositif selon la revendication 7, **caractérisé en ce que** la partie bac (14) présente deux allonges de collier de fixation latérales dépassant la zone du racloir (18) dans la direction du pourtour des parties latérales (12, 12') et pourvues d'orifices (30, 30') pour abriter les mandrins porte-pièces (34, 34').

9. Dispositif selon l'une quelconque des revendications 6 à 8, **caractérisé en ce que** le dispositif de serrage présente deux mécanismes de serrage (36, 38) disposés dans la patrie supérieure des parties latérales (12, 12').

10. Dispositif selon la revendication 9, **caractérisé en ce que** les mécanismes de serrage (36, 38) présentent chacun une griffe de serrage (36) disposée de manière mobile par rapport à la partie latérale (12, 12') et présentant à son extrémité libre le mandrin porte-pièces (32, 32').

11. Dispositif selon la revendication 10, **caractérisé en ce que** la griffe de serrage (36) présente un alésage fileté traversant, destiné à abriter une vis de serrage (38) qui peut s'appuyer contre la partie latérale (12,12').

12. Boîtier externe destiné à abriter un dispositif selon l'une quelconque des revendications 1 à 11 et les groupes secondaires et/ou dispositifs de commande qui concement un tel dispositif, comportant des parois (42-50) délimitant au moins latéralement et au-dessus l'espace intérieur du boîtier, **caractérisé en ce qu'**au moins une des parois de boîtier (42) présente une portion de paroi (54) qui bascule vers l'extérieur ou se déplace parallèlement à la paroi de boîtier (42) et qui, au choix, ouvre ou ferme l'accès à une ouverture (70) permettant le prélèvement d'au moins la partie bac (14) du dispositif.

13. Boîtier externe selon la revendication 12, **caractérisé en ce que** la portion de paroi est constituée d'un volet (54) essentiellement rectangulaire, qui peut être basculé sur ses bords inférieurs par rapport à la paroi de boîtier (42) qui l'entoure.

14. Boîtier externe selon l'une des revendications 12 ou 13, **caractérisé en ce que** la portion de paroi (42) présente un orifice de déversement (58) de la glace en copeaux fabriquée à l'aide du dispositif.

15. Boîtier externe selon la revendication 14, **caractérisé en ce que** la face externe de la portion de paroi (42) présente un couloir de déversement incliné vers le bas (60), relié de préférence au bord inférieur de l'orifice de déversement (58) et destiné à déverser la glace en écailles.

16. Boîtier externe selon l'une quelconque des revendications 12 à 15, **caractérisé en ce que** les parois de boîtier (42-50) sont en métal, de préférence en acier spécial inoxydable.

17. Boîtier externe selon l'une quelconque des revendications 12 à 16, **caractérisé en ce qu'**au moins une des parois du boîtier (42-50) dispose de plusieurs orifices de ventilation (52).

18. Boîtier externe selon l'une quelconque des revendications 12 à 17, **caractérisé en ce que** dans une partie supérieure du boîtier sont disposés un plancher intermédiaire ou des traverses longitudinales et/ou diagonales (56) prévues en tant que console de montage pour le dispositif et/ou les groupes secondaires et/ou les dispositifs de commande qui lui sont affectés.
